(19) Europäisches Patentamt
European Patent Office
Office européen des brevets

(11) EP 3 760 667 A1

(12) EUROPEAN PATENT APPLICATION
published in accordance with Art. 153(4) EPC

(43) Date of publication:
06.01.2021 Bulletin 2021/01

(51) Int Cl.:
C08J 9/06 (2006.01)

(21) Application number: 19760936.5

(22) Date of filing: 18.02.2019

(86) International application number:
PCT/JP2019/005908

(87) International publication number:
WO 2019/167701 (06.09.2019 Gazette 2019/36)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 28.02.2018 JP 2018035389

(71) Applicant: SUMITOMO CHEMICAL COMPANY
LIMITED
Chuo-ku
Tokyo 104-8260 (JP)

(72) Inventor: WATANABE Kenta
Singapore 189352 (SG)

(74) Representative: Winter, Brandl, Fürniss, Hübner,
Röss, Kaiser, Polte - Partnerschaft mbB
Patent- und Rechtsanwaltskanzlei
Alois-Steinecker-Straße 22
85354 Freising (DE)

(54) **RUBBER SPONGE AND FOAMABLE RUBBER COMPOSITION**

(57) There is disclosed a rubber sponge having a foamed part comprising a vulcanized synthetic rubber, wherein a average cell diameter in the foamed part is 10 to 350 μm, and a standard deviation of the cell diameters in the foamed part is 10 to 150 μm. The content of the synthetic rubber may be 20 to 80% by mass based on a mass of the rubber sponge.

Figure 1

EP 3 760 667 A1

Printed by Jouve, 75001 PARIS (FR)

**Description**

Technical Field

The present invention relates to a rubber sponge and a foamable rubber composition which can be used for producing the same.

Background Art

Rubber sponges are foams having elasticity, and are used as sealing materials, joint fillers, sound absorbing materials, heat insulating materials, buffer materials, roll materials and the like in the fields of building and civil engineering, electric apparatuses, automobiles, vehicles, marine vessels, house equipment and the like. A rubber sponge is produced, for example, by a method of foaming and vulcanizing a rubber composition containing a synthetic rubber, such as an ethylene-$\alpha$-olefin-based copolymer rubber, and a foaming agent (for example, Patent Literature 1).

Citation List

Patent Literature

Patent Literature 1: Japanese Patent Laid-Open No. 2003-238725

Summary of Invention

Technical Problem

The impact resilience is demanded for rubber sponges in some cases. Then, an object of one aspect of the present invention is to provide a rubber sponge having a better impact resilience.

Solution to Problem

The present inventor has found that with regard to a rubber sponge containing fine cells, the uniformity of the cell diameter and the impact resilience are related to each other, and this finding has led to the completion of the present invention.
That is, one aspect of the present invention is to provide a rubber sponge having a foamed part comprising a vulcanized synthetic rubber, wherein the average cell diameter in the foamed part is 10 to 350 $\mu$m and the standard deviation of the cell diameters in the foamed part is 10 to 150 $\mu$m. The rubber sponge can have a better impact resilience than conventional rubber sponges.
Another aspect of the present invention relates to a foamable rubber composition comprising a synthetic rubber, an organic filler and a foaming agent. The content of the synthetic rubber is 20 to 80% by mass based on the mass of the foamable rubber composition, and the mass ratio of the content of the organic filler to the content of the synthetic rubber is 0.20 to 1.00. The foamable rubber composition can easily be formed into a rubber sponge having a better impact resilience than conventional rubber sponges.

Advantageous Effects of Invention

According to the present invention, there are provided a rubber sponge having a better impact resilience than conventional rubber sponges, and a foamable rubber composition enabling to produce the same. Generally, although synthetic rubbers are properly used according to applications and the like of rubber sponges, the magnitude of the impact resilience of the rubber sponges can differ depending on the kinds of the synthetic rubbers. Comparing rubber sponges containing a synthetic rubber of the same kind, according to the present invention, there can be provided a rubber sponge having a relatively higher impact resilience than conventional rubber sponges.

Brief Description of Drawing

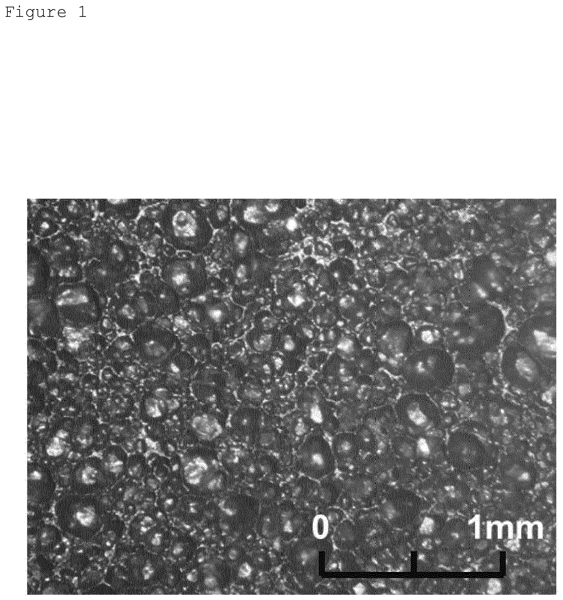

[Figure 1] Figure 1 is a stereoscopic microscope photograph of a cross-section of a rubber sponge fabricated in Example 1.

Description of Embodiments

Hereinafter, some embodiments of the present invention will be described in detail, but the present invention is not limited to the following embodiments.

A rubber sponge according to one embodiment has a foamed part comprising a vulcanized synthetic rubber. The average cell diameter in the foamed part is 10 to 350 $\mu$m and the standard deviation of the cell diameters in the foamed part is 10 to 150 $\mu$m. By setting the average cell diameter and the standard deviation of the cell diameters in the foamed part simultaneously in these ranges, the rubber sponge can have an excellent impact resilience. From the similar viewpoint, the average cell diameter in the foamed part may be 30 to 300 $\mu$m, and the standard deviation of the cell diameters may be 20 to 125 $\mu$m. The average cell diameter in the foamed part may be 50 to 250 $\mu$m or 50 to 200 $\mu$m, and the standard deviation of the cell diameters may be 30 to 100 $\mu$m. When the average cell diameter in the foamed part is 50 $\mu$m or larger, the rubber sponge can more easily be produced. Similarly, when the standard deviation of the cell diameters in the foamed part is 30 $\mu$m or larger, the rubber sponge can more easily be produced.

Here, in the present description, the cell diameter means the maximum width of an individual cell observed in a cross-section of the foamed part of the rubber sponge. The maximum width of a cell is a maximum value of distances between two parallel lines coming in contact with the outer periphery of the cell in the cross-section. The average cell diameter in the foamed part and the standard deviation of the cell diameters in the foamed part are determined by a method including the following procedures.

1) By a stereoscopic microscope, are observed cross-sections of three different positions in an inner side part of the rubber sponge deeper than the depth of a larger value of 10% of the minimum width of the rubber sponge and 1 mm from the surface of the rubber sponge.

2) In the cross-sections observed, cell diameters of all cells observed in regions of 6 mm$^2$ in area are measured.

3) The arithmetic average of all cell diameters measured is taken as an average cell diameter in the foamed part, and the standard deviation of all the cell diameters measured is taken as a standard deviation of cell diameters in the foamed part.

In the above method, the "minimum width of the rubber sponge" is the minimum value of distances between two parallel lines coming in contact with the outer periphery of a projected image obtained by orthogonally projecting the rubber sponge on any plane. In order to make the minimum value of distances between the two parallel lines attainable, the position and direction of the plane on which the rubber sponge is to be projected are determined with respect to the rubber sponge. For example, in the case of a rectangular parallelepiped rubber sponge, the length of its shortest side is the "minimum width of the rubber sponge". In the case of a sheet rubber sponge, usually, its thickness is the "minimum width of the rubber sponge". In the case where the minimum width of the rubber sponge is 10 mm or smaller, cell diameters are measured in an inner side part deeper than the depth of 1 mm from the surface; and in the case where the minimum width of the rubber sponge exceeds 10 mm, cell diameters are measured in an inner side part deeper than the depth of a value of "10% of the minimum width of the rubber sponge".

The rubber sponge may have, as an outermost surface layer, a skin layer having a relatively higher density than the foamed part. Although the boundary between the foamed part and the skin layer is not always distinct, measurement of cell diameters in an inner side part deeper than a certain depth from the surface, as described in the above method, can determine the average cell diameter in the foamed part and the standard deviation of cell diameters in the foamed part. In other words, in the case where the skin layer is present, a part from the surface of the rubber sponge to the depth of a larger value of 10% of the minimum width of the rubber sponge and 1 mm can be regarded as the skin layer, and an inner part deeper than the skin layer can be regarded as the foamed part. Regardless of the presence/absence of the skin layer, however, the average cell diameter in the foamed part and the standard deviation of cell diameters in the foamed part can be determined by the above method.

The density of the rubber sponge or the foamed part may be 0.01 to 0.6 g/mL. The rubber sponge having a density in this range is easily used as a sufficiently light material in various applications. A rubber sponge with excessively low density is usually difficult to produce. A rubber sponge with excessively high density is inferior in lightweightness. From the similar viewpoint, the density of the rubber sponge or the foamed part may be 0.02 to 0.5 g/mL or 0.03 to 0.4 g/mL.

The water absorption of the rubber sponge or the foamed part may be, from the viewpoint of sealability or water cut-off property, 0 to 20%, 0 to 15% or 0 to 10%.

The synthetic rubber in the rubber sponge is usually already vulcanized with a vulcanizing agent such as sulfur or another vulcanizing agent or a crosslinking agent.

The content of the synthetic rubber in the rubber sponge may be, based on the mass of the rubber sponge, 20 to 80% by mass. The rubber sponge having a content of the synthetic rubber in this range is likely to exhibit particularly high impact resilience and good processability. From the similar viewpoint, the content of the synthetic rubber may be 30% by mass or higher, and 50% by mass or lower, 45% by mass or lower or 42% by mass or lower.

The synthetic rubber may contain, for example, ethylene-$\alpha$-olefin-based copolymer rubber, butyl-based rubber, butadiene rubber, styrene butadiene rubber, isoprene rubber, chloroprene rubber, acrylonitrile butadiene rubber, epichlorohydrin rubber, or a combination thereof.

The ethylene-α-olefin-based copolymer rubber may be, for example, ethylene-α-olefin copolymer rubber or ethylene-α-olefin-nonconjugated diene copolymer rubber.

A method for producing the ethylene-α-olefin-based copolymer rubber is not especially limited. The ethylene-α-olefin-based copolymer rubber is obtained, for example, by polymerizing ethylene, α-olefin and in some cases, a nonconjugated diene in the presence of a catalyst such as a so-called Ziegler-Natta catalyst or metallocene catalyst.

As the Ziegler-Natta catalyst, suitable is a combination of an organoaluminum compound with a vanadium compound. Examples of the organoaluminum compound constituting the Ziegler-Natta catalyst include triethylaluminum, diethylaluminium chloride, ethylaluminum sesquichloride, isobutylaluminum sesquichloride, ethylaluminum dichloride, isobutylaluminum dichloride and combinations thereof. Examples of the vanadium compound constituting the Ziegler-Natta catalyst include vanadium tetrahalides, vanadium oxyhalides, vanadium triacetylacetonate, vanadium oxydiacetylacetonate, vanadium oxytrialkoxides, halogenated vanadium oxyalkoxides and combinations thereof.

With the organoaluminum compound and the vanadium compound as the Ziegler-Natta combination catalyst, an alcohol can also be used, such as methanol, ethanol, 1-propanol, 2-propanol, 1-butanol, 2-methyl-1-propanol, 2-butanol or 2-methyl-2-propanol. Hydrogen can also be used as a chain transfer agent.

Examples of the metallocene catalyst include transition metal complexes having at least one cyclopentadienyl skeleton. The transition metal complex is a compound containing a transition metal atom. The transition metal atom used here means a group 4 transition metal element in Periodic Table of Element (Revised edition of IUPAC Inorganic Chemistry Nomenclature (1989)); and examples thereof include a titanium atom, a zirconium atom and a hafnium atom.

Examples of the α-olefin constituting the ethylene-α-olefin-based copolymer rubber include propylene, 1-butene, 1-pentene, 1-hexene, 4-methyl-1-pentene, 1-octene and 1-decene. The α-olefin may be propylene, 1-butene or a combination thereof.

Examples of a nonconjugated diene constituting the ethylene-α-olefin-nonconjugated diene copolymer rubber include chain nonconjugated dienes such as 1,4-hexadiene, 1,6-octadiene, 2-methyl-1,5-hexadiene, 6-methyl-1,5-heptadiene and 7-methyl-1,6-octadiene, cyclic nonconjugated dienes such as cyclohexadiene, dicyclopentadiene, methyltetraindene, 5-vinylnorbornene, 5-ethylidene-2-norbornene and 6-chloromethyl-5-isopropenyl-2-norbornene, trienes such as 2,3-diisopropylidene-5-norbornene, 2-ethylidene-3-isopropylidene-5-norbornene, 2-propenyl-2,2-norbonadiene, 1,3,7-octatriene and 1,4,9-decatriene, and 5-vinyl-2-norbornene, 5-(2-propenyl)-2-norbornene, 5-(3-butenyl)-2-norbornene, 5-(4-pentenyl)-2-norbornene, 5-(5-hexenyl)-2-norbornene, 5-(5-heptenyl)-2-norbornene, 5-(7-octenyl)-2-norbornene, 5-methylene-2-norbornene, 6,10-dimethyl-1,5,9-undecatriene, 5,9-dimethyl-1,4,8-decatriene, 4-ethylidene-8-methyl-1,7-nonadiene, 13-ethyl-9-methyl-1,9,12-pentadecatriene, 5,9,13-trimethyl-1,4,8,12-tetradecadiene, 8,14,16-trimethyl-1,7,14-hexadecatriene and 4-ethylidene-12-methyl-1,11-pentadecadiene. The ethylene-α-olefin-nonconjugated diene copolymer rubber may contain, as monomer units, one or more nonconjugated dienes selected from these. The nonconjugated diene may be 5-ethylidene-2-norbornene, dicyclopentadiene or a combination thereof.

The intrinsic viscosity of the ethylene-α-olefin-based copolymer rubber (for example, ethylene-propylene-based copolymer rubber) as measured in tetralin at 135°C may be 1.0 to 4.0 dl/g or lower. When the intrinsic viscosity is 1.0 dl/g or higher, the impact resilience of the rubber sponge is likely to be more enhanced. When the intrinsic viscosity is 4.0 dl/g or lower, the roll processability of the rubber composition is likely to be improved. From the similar viewpoint, the intrinsic viscosity of the ethylene-α-olefin-based copolymer rubber as measured in tetralin at 135°C may be 1.2 to 3.0 dl/g or 1.4 to 2.5 dl/g.

The intrinsic viscosity (unit: dl/g) is measured, for example, under the following condition. The reduced viscosity (viscosity number) of a solution of the copolymer whose concentration is already known is measured in tetralin at 135°C by using an Ubbelohde viscometer. From the measurement result, the intrinsic viscosity of the copolymer is determined according to a calculation process described in "Polymer Solution, Polymer Experimentology 11" (1982, published by Kyoritsu Shuppan Co., Ltd.), p.491.

The content of an α-olefin unit in the ethylene-α-olefin-based copolymer rubber may be 20 to 70% by mass with respect to 100% by mass of the total of the content of an ethylene unit and the content of the α-olefin unit. When the content of the α-olefin is 20% by mass or higher, the processability of the rubber sponge can be improved. When the content of the α-olefin is 70% by mass or lower, the durability of the rubber sponge can be improved. From the similar viewpoint, the content of the α-olefin unit may be 25 to 65% by mass or 30 to 60% by mass.

The content of an ethylene unit in the ethylene-α-olefin-based copolymer rubber may be 30 to 80% by mass, 35 to 75% by mass or 40 to 70% by mass, with respect to 100% by mass of the total of the content of the ethylene unit and the content of an α-olefin unit.

The content of a nonconjugated diene unit in the ethylene-α-olefin-nonconjugated diene copolymer rubber may be 1 to 15% by mass, 2 to 13% by mass or 3 to 11% by mass, with respect to 100% by mass of the total of the content of an ethylene unit, the content of an α-olefin unit and the content of the nonconjugated diene unit.

When the synthetic rubber contains two or more kinds of ethylene-α-olefin-based copolymer rubber, the above-mentioned intrinsic viscosity, the content of the ethylene unit, the content of the α-olefin unit and the content of the nonconjugated diene unit are values for the total of the combination of the two or more kinds.

The synthetic rubber may be introduced in the rubber composition as an oil extended rubber being a mixture with a process oil such as a paraffin oil or a naphthene oil.

The rubber sponge may further comprise an organic filler. In this case, from the viewpoint of improving the impact resilience, the mass ratio of the content of the organic filler to the content of the synthetic rubber may be 0.20 or higher, or 0.25 or higher, and may be 1.00 or lower or 0.90 or lower. From the similar viewpoint, the content of the organic filler may be, based on the mass of the rubber sponge, 8% by mass or higher, 9% by mass or higher or 10% by mass or higher, and may be 40% by mass or lower, 35% by mass or lower or 30% by mass or lower. The organic filler may be dispersed in the foamed part. When the rubber sponge has the skin layer, the organic filler may be dispersed in the foamed part and the skin layer.

The organic filler suffices if being capable of being dispersed in the rubber composition comprising the synthetic rubber. The organic filler may be a particle including an organic polymer, or may be a particle composed substantially of an organic polymer. The particle composed substantially of an organic polymer refers to a particle in which 95% by mass or more based on the mass of the particle is the organic polymer. The organic polymer for forming the particle containing an organic polymer can be, for example, a thermoplastic resin, a thermosetting resin or a cured material thereof. Examples of the thermoplastic resin include vinyl chloride-based resins, polyethylene resins, polypropylene resins and polymethyl methacrylate resins. For example, when the organic filler is a particle containing a vinyl chloride-based resin as a part or the whole of the organic filler, the organic filler may be a particle containing the vinyl chloride-based resin in 60 to 100% by mass of the organic filler.

The vinyl chloride-based resins are vinyl chloride homopolymers or copolymers containing vinyl chloride as a monomer unit. Examples of the monomer constituting the copolymers together with vinyl chloride include vinyl esters such as vinyl acetate and vinyl propionate, unsaturated carboxylic acids such as acrylic acid, methacrylic acid and itaconic acid, unsaturated carboxylate esters such as methyl acrylate, methyl methacrylate and ethyl itaconate, olefins such as ethylene and propylene, vinyl ethers such as methyl vinyl ether and ethyl vinyl ether, and fumaric acid, maleic acid, and anhydrides thereof and esterified substances thereof. Examples of methods for producing the vinyl chloride-based resins such as vinyl chloride homopolymers include suspension polymerization, emulsion polymerization and microsuspension polymerization. The particle containing the vinyl chloride-based resin may be one produced by the emulsion polymerization or microsuspension polymerization.

The average particle diameter of the organic filler is not especially limited, but may be 0.1 to 30 $\mu$m and may be 0.1 to 10 $\mu$m or 0.1 to 5 $\mu$m. The average particle diameter of the organic filler can be an arithmetic average of the maximum widths of the organic filler measured when a cross-section of the rubber sponge is observed. Further the average particle diameter of the organic filler may be an arithmetic average of the maximum widths of the organic filler measured when the organic filler is observed by an electron microscope before it is incorporated in the rubber composition for forming the rubber sponge. Since the average particle diameter of the organic filler does not substantially vary before the organic filler is incorporated in the rubber composition and after the rubber sponge is formed, there is usually substantially no difference between the average particle diameter of the organic filler before incorporated in the rubber composition and the average particle diameter of the organic filler in the rubber sponge. When the average particle diameter of the organic filler is in the above range, the rubber sponge is easily formed which has the foamed part having an average cell diameter of 10 to 350 $\mu$m and a standard deviation of cell diameters in the range of 10 to 150 $\mu$m.

The rubber sponge may contain an inorganic filler as a reinforcing agent or a filler. Examples of the reinforcing agent include carbon black and silica. Examples of the filler include calcium carbonate, calcium oxide, magnesium oxide, titanium oxide, alumina, clay, talc, mica, montmorillonite, hydrotalcite, zeolite, barium sulfate, magnesium hydroxide, aluminum hydroxide, antimony trioxide and calcium silicate. The content of the reinforcing agent may be 0 to 100 parts by mass, 5 to 50 parts by mass or 10 to 30 parts by mass, with respect to 100 parts by mass of the synthetic rubber. The content of the filler may be 0 to 50 parts by mass, 0 to 40 parts by mass or 0 to 30 parts by mass, with respect to 100 parts by mass of the synthetic rubber. Particularly when the content of the reinforcing agent with respect to the content of the synthetic rubber is 0 to 100 parts by mass and the content of the filler with respect to the content of the synthetic rubber is 0 to 50 parts by mass, the rubber sponge is easily formed which has the foamed part having an average cell diameter of 10 to 350 $\mu$m and a standard deviation of cell diameters in the range of 10 to 150 $\mu$m.

The rubber sponge may contain a process oil. Examples of the process oil include paraffin oil, naphthene oil and aromatic oil. The content of the process oil may be 0 to 250 parts by mass, 10 to 200 parts by mass or 30 to 160 parts by mass, with respect to 100 parts by mass of the synthetic rubber.

The rubber sponge may further contain, as required, other components such as zinc oxide, stearic acid, polyethylene glycol, calcium oxide, a foaming aid, a crosslinking agent, a coagent, an antioxidant, sulfur, a vulcanization accelerator, tacky substances (polybutene, rosin and the like), and thermoplastic resins (polyethylene, polypropylene and the like). Cells in the rubber sponge can contain a gas component originating from the foaming agent.

The rubber sponge can be produced, for example, by a method including molding the foamable rubber composition comprising the synthetic rubber and the foaming agent to obtain a molding, vulcanizing the synthetic rubber in the molding, and foaming the molding to make a foam. The steps of vulcanization and making a foam may be carried out concurrently or sequentially.

The foaming agent contained in the foamable rubber composition can be selected from foaming agents usually used for forming rubber foams. Examples of the foaming agent include azodicarbonamide, azobisisobutyronitrile, dinitrosopentamethylenetetramine, 4,4'-oxybisbenzenesulfonyl hydrazide, sodium bicarbonate, sodium carbonate, ammonium bicarbonate, ammonium carbonate, ammonium nitrite, N,N'-dimethyl-N,N'-dinitrone-terephthalamide, azocyclohexylnitrile, azodiaminobenzene, barium-azodicarboxylate, benzenesulfonyl-hydrazide, toluene-sulfonyl-hydrazide, diphenylsulfone-3,3'-disulfonyl-hydrazide, calcium azide and 4,4'-diphenyl-disulfonylazide-para-toluene-sulfonylazide. The foaming agent may be azodicarbonamide. The content of the foaming agent may be 1 to 35 parts by mass or 2 to 30 parts by mass, with respect to 100 parts by mass of the synthetic rubber.

The foamable rubber composition may contain a foaming aid to lower the decomposition temperature of the foaming agent. Examples of the foaming aid include urea aids. The content of the foaming aid may be 1 to 20 parts by mass, 1.5 to 15 parts by mass or 2 to 12 parts by mass, with respect to 100 parts by mass of the synthetic rubber.

The foamable rubber composition may contain a vulcanizing agent to vulcanize the synthetic rubber. Examples of the vulcanizing agent include sulfur, sulfur-based compounds and organic peroxides. The sulfur may be powdery sulfur, precipitated sulfur, colloidal sulfur, surface-treated sulfur, insoluble sulfur and the like. The content of the vulcanizing agent in the foamable rubber composition may be 0.5 to 5 parts by mass or 0.6 to 4 parts by mass, with respect to 100 parts by mass of the synthetic rubber.

The foamable rubber can contain, in addition to the synthetic rubber, the foaming agent and the vulcanizing agent, the components above mentioned as components of the rubber sponge. The content of each component is similar; and the content thereof based on the mass of the rubber sponge can be rephrased to a content thereof based on the total mass of the components excluding the foaming agent in the foamable rubber composition. Particularly when the content of the synthetic rubber is 20 to 80% by mass based on the total mass of the components excluding the foaming agent in the foamable rubber composition, and the ratio of the content of the organic filler to the content of the synthetic rubber is 0.20 to 1.0, the rubber sponge is easily formed which has the foamed part having an average cell diameter of 10 to 350 μm and a standard deviation of cell diameters in the range of 10 to 150 μm. It is more suitable, from the viewpoint that the rubber sponge is easily formed, that the content of the synthetic rubber is 30 to 80% by mass based on the total mass of the components excluding the foaming agent in the foamable rubber composition.

The foamable rubber composition can be obtained by kneading each component by a usual method such as a Banbury mixer, a kneader or a roll. The foamable rubber composition is molded by various types of methods such as extrusion to obtain moldings. In molding, the foamable rubber composition may be melted under reduced pressure. When the foamable rubber composition is molded while being melted under reduced pressure, the rubber sponge having the foamed part having a small average cell diameter and a low standard deviation of cell diameters is likely to be easily formed. The gage pressure of the reduced pressure atmosphere here may be -10 kPa or lower.

When the foamable rubber composition contains the vulcanizing agent, by heating the moldings, the synthetic rubber is vulcanized and the moldings are foamed to make foams. The heating condition therefor suffices if being suitably regulated so that the vulcanization and the foaming suitably progress, but may be a two or more-stage heating comprising heating at 90 to 130°C for 10 to 60 min and successive heating at 140 to 200°C for 10 to 60 min.

The rubber sponge according to the present embodiment can be applied as sealing materials, joint fillers, sound absorbing materials, heat insulating materials, buffer materials, roll materials, cushioning materials, flooring materials, cloth lining materials, skin backing materials, water cut-off materials, piping covering materials, electric wire covering materials and packaging materials in the fields of building and civil engineering, electric apparatuses, OA machines, air conditioning apparatuses, automobiles, vehicles, marine vessels, house equipment, bedding, furniture, nursing care articles, sporting goods and the like.

Examples

Hereinafter, the present invention will be described more specifically by way of Examples. However, the present invention is not limited to these Examples.

(Measurement and Evaluation methods)

From a surface layer part of a rubber sponge obtained in each of Examples and Comparative Examples described later, a part up to 10 mm in thickness including a skin layer was removed, and were measured the density, the water absorption, the average cell diameter, the standard deviation of cell diameters and the impact resilience for the remaining foamed part of the rubber sponge, by the following procedures.

(1) Density

A test piece having a size of 40 mm × 40 mm × 40 mm was punched out from the foamed part. By using the test piece, the density of the foamed part of the rubber sponge was measured by an underwater substitution method according to JIS K6268.

(2) Water Absorption

A test piece having a size of 40 mm × 40 mm × 40 mm was punched out from the foamed part, and the mass of the test piece was measured. The test piece was submerged under water; the atmosphere was reduced in pressure to -625 mmHg and held thereat for 3 min while the test piece was held in the state of being completely immersed in water by a wiremesh and a weight. Then, the atmosphere was returned to the atmospheric pressure, and after the lapse of 1 min, the mass of the test piece after the immersion having absorbed water was measured. The water absorption was calculated from the following expression.

$$\text{Water absorption (\%)} = \{(W1-W0)/W0\} \times 100$$

W0: a test piece mass (g) before immersion

W1: a test piece mass (g) after immersion

(3) Average Cell Diameter

The foamed part was cut into a proper size. Cross-sections of the foamed part formed by the cutting were observed by using a stereoscopic microscope (manufactured by Nikon Corp.) at a magnification of 30 times, and photographs of enlarged images were taken for the cross-sections of three different locations of the foamed part. In each of the obtained three cross-sectional photographs, cell diameters of all cells observed in a region of 6 mm$^2$ in area were measured. The arithmetic average of all the cell diameters obtained from the three cross-sectional photographs was calculated as an average cell diameter in the foamed part. Figure 1 is a stereoscopic microscope photograph used for deriving the average cell diameter of the rubber sponge (foamed part) obtained in Example 1.

(4) Standard Deviation of Cell Diameters

The standard deviation of all the cell diameters obtained in the three cross-sectional photographs in "(3) The average cell diameter" was calculated by the following expression.

[Expression 1]

$$s = \sqrt{\frac{1}{n} \sum_{i=1}^{n} (x_i - \bar{x})^2}$$

s: Standard deviation, n: Total number of data, $x_i$: Value of each cell diameter, $\bar{x}$: Average cell diameter

(5) Impact Resilience

A test piece of 25 mm in thickness was punched out from the foam. The impact resilience at 30°C of the test piece was measured by a pendulum type test using a Lupke Rebound Resilience Tester (manufactured by Ueshima Seisakusho Co., Ltd.) under the condition, excluding the thickness of the test piece, according to JIS K6255.

[Example 1]

(Production of a foamable rubber composition)

A rubber composition was obtained by kneading (A) a synthetic rubber, (B) an organic filler, and other additives, indicated in the below, by using a 1,700-ml Banbury mixer (manufactured by KOBE Steel, Ltd.) whose starting temperature was regulated at 70°C, at a rotor rotation frequency of 60 rpm for 8 min.

(A) synthetic rubber:

- copolymer-A (ethylene-propylene-5-ethylidene-2-norbornene copolymer rubber, intrinsic viscosity measured in tetralin at 135°C: 1.6 dl/g, content of an ethylene unit: 54% by mass, content of a nonconjugated diene unit: 4.0% by mass, manufactured by Sumitomo Chemical Co., Ltd., trade name: "ESPRENE 501A"): 50 parts by mass
- copolymer-B (ethylene-propylene-5-ethylidene-2-norbornene copolymer rubber, intrinsic viscosity measured in tetralin at 135°C: 1.5 dl/g, content of an ethylene unit: 55% by mass, content of a nonconjugated diene unit: 9.5% by mass, manufactured by Sumitomo Chemical Co., Ltd., trade name: "ESPRENE 505A"): 50 parts by mass

(B) organic filler:

- PVC-A (a powdery polyvinyl chloride composed substantially of polyvinyl chloride, produced by emulsion polymerizing a vinyl chloride monomer, a mixture having arithmetic average particle diameters of the maximum widths of 1.0/0.3 $\mu$m in observation by a scanning electron microscope): 75 parts by mass

The other additives:

- a carbon black (manufactured by Asahi Carbon Co., Ltd., trade name: "Asahi #50G"): 20 parts by mass
- a process oil (manufactured by Idemitsu Kosan Co., Ltd., trade name: "Diana Process Oil PS-430"): 70 parts by mass
- a polyethylene glycol (manufactured by Sanyo Chemical Industries, Ltd., trade name: "PEG-4000S"): 2 parts by mass
- a zinc oxide (manufactured by Seidou Kagaku Kogyo K.K., trade name: "Zinc Oxide Type II"): 5 parts by mass
- a stearic acid (manufactured by New Japan Chemical Co., Ltd., trade name: "Stearic Acid 50S"): 1 part by mass

A foamable rubber composition was obtained by kneading the obtained rubber composition, (C) a foaming agent, a vulcanizing agent and other additives, indicated in the below, by using an 8-inch open roll (manufactured by Kansai Roll Co., Ltd.). "Parts by mass" representing a compounding proportion of each component indicated in the below was a relative value based on a compounding proportion (for example, the compounding proportion of the copolymer-A was 50 parts by mass) in the above preparation of the rubber composition.
(C) foaming agent:

- an azodicarbonamide (manufactured by Sankyo Chemical Co., Ltd., trade name: "Cellmic C-1"): 7.0 parts by mass
The vulcanizing agent:
- a sulfur (manufactured by Tsurumi Chemical Industry Co., Ltd., trade name: "Golden Flower" sulfur powder, 200-mesh): 1.5 parts by mass

The other additives:

- a urea aid: (manufactured by Sankyo Chemical Co., Ltd., trade name: "Cellton NP"): 3.7 parts by mass
- a 2-mercaptobenzothiazole masterbatch (manufactured by Rhein Chemie Japan Ltd., trade name: "Rhenogran MBT-80"): 1.25 parts by mass
- a zinc diethyldithiocarbamate masterbatch (manufactured by Rhein Chemie Japan Ltd., trade name: "Rhenogran ZDEC-80"): 2.5 parts by mass
- a zinc dimethyldithiocarbamate masterbatch (manufactured by Rhein Chemie Japan Ltd., trade name: "Rhenogran ZDMC-80"): 1.25 parts by mass

(Production of a rubber sponge)

The foamable rubber composition was molded by using an extruder (L/D = 16, manufactured by Nakata Engineering Co., Ltd.) having a cylinder internally installed with a screw of 45 mm in diameter to thereby obtain an extruded article having a rectangular parallelepiped shape (width: about 40 mm, length: about 150 mm, height: about 35 mm).

During the extrusion, the interior of the cylinder was reduced in pressure to a gage pressure of -101 kPa.

The obtained extruded article was continuously heated at 120°C for 40 min, at 140°C for 20 min, at 150°C for 10 min and at 160°C for 20 min in order in a hot-air vulcanization chamber set at the each temperature to vulcanize and foam the foamable rubber composition forming the extruded article to thereby obtain a rectangular parallelepiped rubber sponge having a skin layer.

[Example 2]

A rubber sponge was fabricated as in Example 1, except for altering the compounding proportion of the azodicarbonamide to 15.0 parts by mass and altering the compounding proportion of the urea aid to 8.0 parts by mass.

[Example 3]

A rubber sponge was fabricated as in Example 1, except for altering the compounding proportion of the azodicarbonamide to 24.0 parts by mass and altering the compounding proportion of the urea aid to 8.0 parts by mass.

[Example 4]

A rubber sponge was fabricated as in Example 2, except for altering the compounding proportion of the PVC-A to 25 parts by mass.

[Example 5]

A rubber sponge was fabricated as in Example 2, except for altering the compounding proportion of the PVC-A to 50 parts by mass.

[Example 6]

A rubber sponge was fabricated as in Example 2, except for using 75 parts by mass of PVC-B (a powdery polyvinyl chloride composed substantially of polyvinyl chloride, produced by emulsion polymerizing a vinyl chloride monomer, having an arithmetic average particle diameter of the maximum widths of 1.0 $\mu$m in observation by a scanning electron microscope) in place of the PVC-A.

[Example 7]

A rubber sponge was fabricated as in Example 2, except for using 75 parts by mass of PVC-C (a powdery polyvinyl chloride composed substantially of polyvinyl chloride, produced by emulsion polymerizing a vinyl chloride monomer, a mixture having arithmetic average particle diameters of the maximum widths of 1.0/0.3/0.1 $\mu$m in observation by a scanning electron microscope) in place of the PVC-A.

[Comparative Example 1]

A rubber sponge was fabricated as in Example 2, except for compounding no component (B).

[Comparative Example 2]

A rubber sponge was fabricated as in Example 2, except for altering the compounding proportion of the PVC-A to 5 parts by mass.

[Comparative Example 3]

A rubber sponge was fabricated as in Example 2, except for altering the compounding proportion of the PVC-A to 15 parts by mass.

[Comparative Example 4]

A rubber sponge was fabricated as in Example 2, except for altering the compounding proportion of the PVC-A to 125 parts by mass.

[Comparative Example 5]

A rubber sponge was fabricated as in Example 2, except for altering the compounding proportion of the PVC-A to 175 parts by mass.

[Comparative Example 6]

A rubber sponge was fabricated as in Example 2, except for further adding, as the filler, 50 parts by mass of a calcium carbonate (manufactured by Nitto Funka Kogyo K.K., trade name: "NS#200") and 5 parts by mass of a calcium oxide (manufactured by Inoue Calcium Corp., trade name: "VESTA-PP").

In Table 1 and Table 2, are shown compounding proportions of the component (A), the component (B) and the component (C) of the foamable rubber compositions in each Example and Comparative Example, and evaluation results of the fabricated rubber sponges. The contents of the component (A) are indicated as ratios based on the total masses (corresponding to the masses of the rubber sponges) excluding the component (C) in the rubber compositions. The rubber sponges of the Examples, in which the average cell diameters in the foamed parts were 10 to 350 $\mu$m and the standard deviations of cell diameters in the foamed parts were 10 to 150 $\mu$m, exhibited higher impact resiliences than the rubber sponges of the Comparative Examples, which contained the same synthetic rubber.

[Table 1]

| | | Example | | | | | | |
|---|---|---|---|---|---|---|---|---|
| | | 1 | 2 | 3 | 4 | 5 | 6 | 7 |
| (A) Synthetic rubber | Copolymer-A | 50 | 50 | 50 | 50 | 50 | 50 | 50 |
| | Copolymer -B | 50 | 50 | 50 | 50 | 50 | 50 | 50 |
| (B) Organic filler | PVC-A | 75 | 75 | 75 | 25 | 50 | - | - |
| | PVC-B | - | - | - | - | - | 75 | - |
| | PVC-C | - | - | - | - | - | - | 75 |
| (C) Foaming agent | azodicarbonamide | 7.0 | 15 | 24 | 15 | 15 | 15 | 15 |
| Content of component (A) (% by mass) (Rubber sponge) | | 35 | 35 | 35 | 42 | 38 | 35 | 35 |
| component (B)/component (A) (mass ratio) | | 0.75 | 0.75 | 0.75 | 0.25 | 0.50 | 0.75 | 0.75 |
| Rubber sponge (Foamed part) | Density (g/mL) | 0.25 | 0.10 | 0.06 | 0.11 | 0.11 | 0.11 | 0.10 |
| | Water absorption coefficient (%) | 0.7 | 2.4 | 4.0 | 3.7 | 4.2 | 3.0 | 2.8 |
| | Average cell diameter ($\mu$m) | 113 | 107 | 187 | 168 | 134 | 116 | 123 |
| | Standard deviation of cell diameters ($\mu$m) | 50 | 54 | 82 | 65 | 62 | 54 | 55 |
| | Impact resilience (%) | 65 | 75 | 69 | 81 | 78 | 75 | 72 |

[Table 2]

| | | Comparative Example | | | | | |
|---|---|---|---|---|---|---|---|
| | | 1 | 2 | 3 | 4 | 5 | 6 |
| (A) Synthetic rubber | Copolymer-A | 50 | 50 | 50 | 50 | 50 | 50 |
| | Copolymer-B | 50 | 50 | 50 | 50 | 50 | 50 |
| (B) Organic filler | PVC-A | - | 5 | 15 | 125 | 175 | 75 |
| | PVC-B | - | - | - | - | - | - |
| | PVC-C | - | - | - | - | - | - |
| (C) Foaming agent | azodicarbonamide | 15 | 15 | 15 | 15 | 15 | 15 |

(continued)

|  | | Comparative Example | | | | | |
|---|---|---|---|---|---|---|---|
|  | | 1 | 2 | 3 | 4 | 5 | 6 |
| Content of component (A) (% by mass) (Rubber sponge) | | 47 | 46 | 44 | 30 | 26 | 29 |
| component (B)/component (A) (mass ratio) | | 0 | 0.05 | 0.15 | 1.25 | 1.75 | 0.75 |
| Rubber sponge (Foamed part) | Density (g/mL) | 0.10 | 0.09 | 0.09 | 0.12 | 0.23 | 0.13 |
| | Water absorption coefficient (%) | 2.6 | 17.1 | 10.5 | 11.5 | 205 | 3.2 |
| | Average cell diameter ($\mu$m) | 886 | 545 | 489 | 353 | 382 | 208 |
| | Standard deviation of cell diameters ($\mu$m) | 276 | 345 | 223 | 162 | 171 | 158 |
| | Impact resilience (%) | 40 | 45 | 62 | 61 | 41 | 56 |

**Claims**

1. A rubber sponge, having a foamed part comprising a vulcanized synthetic rubber,
   wherein an average cell diameter in the foamed part is 10 to 350 $\mu$m; and
   a standard deviation of cell diameters in the foamed part is 10 to 150 $\mu$m.

2. The rubber sponge according to claim 1, wherein a content of the synthetic rubber is 20 to 80% by mass based on a mass of the rubber sponge.

3. The rubber sponge according to claim 1 or 2, wherein the synthetic rubber comprises an ethylene-$\alpha$-olefin-noncon-jugated diene copolymer rubber.

4. The rubber sponge according to any one of claims 1 to 3, the rubber sponge further comprising an organic filler.

5. The rubber sponge according to claim 4, wherein a ratio of a content of the organic filler to a content of the synthetic rubber is 0.20 to 1.00.

6. The rubber sponge according to claim 4 or 5, wherein the organic filler comprises a particle comprising a vinyl chloride-based resin.

7. A foamable rubber composition, comprising:

   a synthetic rubber;
   an organic filler; and
   a foaming agent,
   wherein a content of the synthetic rubber is 30 to 80% by mass based on a total mass of the components excluding the foaming agent in the foamable rubber composition; and
   a mass ratio of a content of the organic filler to the content of the synthetic rubber is 0.20 to 1.00.

8. The foamable rubber composition according to claim 7, wherein the organic filler comprises a particle comprising a vinyl chloride-based resin.

Figure 1

## INTERNATIONAL SEARCH REPORT

International application No.

PCT/JP2019/005908

### A. CLASSIFICATION OF SUBJECT MATTER
Int.Cl. C08J9/06(2006.01)i

According to International Patent Classification (IPC) or to both national classification and IPC

### B. FIELDS SEARCHED

Minimum documentation searched (classification system followed by classification symbols)
Int.Cl. C08J9/06

Documentation searched other than minimum documentation to the extent that such documents are included in the fields searched
| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2004-315701 A (HOKUSHIN IND INC.) 11 November 2004, claims, paragraph [0018], examples (Family: none) | 1-3 |
| X | JP 2003-238725 A (SUMITOMO CHEM CO., LTD.) 27 August 2003, claims, paragraphs [0002], [0016], examples (Family: none) | 1-8 |
| X | JP 3-74439 A (TONEN CHEM CORP.) 29 March 1991, claims, page 4, lower left column, line 6 to last line, examples (Family: none) | 1-8 |

☐ Further documents are listed in the continuation of Box C.  ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 11.03.2019 | 19.03.2019 |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003238725 A

**Non-patent literature cited in the description**

- *Revised edition of IUPAC Inorganic Chemistry Nomenclature,* 1989

- Polymer Solution, Polymer Experimentology. Kyoritsu Shuppan Co., Ltd, 1982, vol. 11, 491